# EUROPÄISCHE PATENTSCHRIFT

(11) **EP 3 580 527 B1**
(45) Veröffentlichungstag und Bekanntmachung des Hinweises auf die Patenterteilung: **19.08.2020**
(21) Anmeldenummer: 19721562.7
(22) Anmeldetag: 18.04.2019
(51) Int. Cl.: G01F 1/075, G01F 1/08

(54) **TURBINENRADZÄHLER**
TURBINE WHEEL COUNTER
COMPTEUR À TURBINE

(30) Priorität: 18.04.2018 EP 18168097
(43) Veröffentlichungstag der Anmeldung: 18.12.2019
(73) Patentinhaber: BWT Aktiengesellschaft, 5310 Mondsee (AT)
(72) Erfinder: MAIRHOFER, Anton, 4893 Zell am Moos (AT)
(74) Vertreter: Jell, Friedrich
(86) Internationale Anmeldenummer: PCT/EP2019/060208
(87) Internationale Veröffentlichungsnummer: WO 2019/202134

(56) Entgegenhaltungen:
- DE-A1-102014 017 372
- DE-C- 466 300
- GB-A- 529 615
- JP-A- 2002 039 817
- US-A- 1 713 977

## Beschreibung

### Technisches Gebiet

Die Erfindung betrifft einen Turbinenradzähler zur Durchflussmengenmessung einer Flüssigkeit, insbesondere Wasser, mit einer Messeinrichtung, mit einem Einlass und einem Auslass für die zu messende Flüssigkeit, mit einem zwischen Ein- und Auslass vorgesehenen Strömungskanal und mit einer Turbine, die ein im Strömungskanal angeordnetes Turbinenrad mit gekrümmten Schaufeln aufweist und wobei das Turbinenrad mit der Messeinrichtung zur Durchflussmengenmessung der Flüssigkeit

### Stand der Technik

Turbinenradzähler mit einem als Flügelrad ausgebildeten Turbinenrad in einem Strömungskanal für Flüssigkeit, nämlich Trinkwasser, sind aus dem Stand der Technik bekannt. So offenbart beispielsweise die EP0512325A2, bei einem Einstrahl- oder Mehrstrahl-Flügelradzähler, am Turbinenrad Schaufeln vorzusehen, welche sich am stirnseitigen Ende des Turbinenrads gekrümmt zu einer Spitze hin verjüngen. Auf diese Weise soll dem Flügelrad des Turbinenradzählers ein verminderter Anlaufwert und damit eine höhere Empfindlichkeit der Messeinrichtung, welche mit dem Turbinenrad zur Durchflussmengenmessung der Flüssigkeit zusammenwirkt, zukommen. Auch ist es beispielsweise bekannt, den Anlaufwert eines Einstrahlradzählers mit einer Düse vor dem Flügelrad mit radialen Schaufeln zu verringern (DE 0669520 A1). All diese konstruktiven Maßnahmen zur Erhöhung der Messempfindlichkeit erfordern allerdings einen erhöhten Druckabfall bzw. -verlust am Turbinenradzähler.

GB 529 615 A offenbart ein Turbinenradzähler zur Durchflussmengenmessung einer Flüssigkeit, mit einer Messeinrichtung, mit einem zwischen ein Ein- und Auslass vorgesehenen Strömungskanal und mit einer Turbine, die ein im Strömungskanal angeordnetes Turbinenrad mit gekrümmten Schaufeln aufweist. Das Turbinenrad wirkt mit der Messeinrichtung zur Durchflussmengenmessung der Flüssigkeit zusammen. Die Turbine ist als Radialturbine mit einfach gekrümmten Schaufeln am Turbinenrad ausbildet.

### Darstellung der Erfindung

Die Erfindung hat sich daher die Aufgabe gestellt, einen Turbinenradzähler der eingangs beschriebenen Art derart konstruktiv zu verändern, dass trotz vergleichsweise hoher Messempfindlichkeit ein relativ geringer Druckverlust besteht. Außerdem soll der Turbinenradzähler dabei konstruktiv einfach ausgeführt sein und hohe Standfestigkeit aufweisen.

Die Erfindung löst die gestellte Aufgabe durch die Merkmale des Anspruchs 1.

Ist die Turbine als Radialturbine ausbildet, kann der konstruktive Aufwand im Bereich des Turbinenrads im Vergleich mit einem Flügelrad eines Flügelradzählers oder einer Axialturbine eines Woltmannzählers verringert werden. Die Schaufeln einer Radialturbine können nämlich verhältnismäßig lang am Turbinenradboden des Turbinenrads axial angebunden werden - was nicht nur die Fertigung des Turbinenrads erleichtern, sondern aufgrund einer erhöhten Standfestigkeit auch eine vergleichsweise schlanke Bauform am Turbinenrad mit verbesserter Leichtgängigkeit zulassen kann. Die erfindungsgemäße Radialturbine kann sohin auch zu einer erhöhten Messempfindlichkeit des Turbinenradzählers führen.

Besonders aber kann sich die erfindungsgemäße Radialturbine dadurch auszeichnen, wenn sie mit einfach gekrümmten Schaufeln am, beispielsweise geschlossenen, Turbinenrad ausbildet ist. Dies kann die schlanke Bauform der Radialturbine weiter verbessern, was im Zusammenhang mit der von Radialturbinen bekannten - vergleichsweise kurzen - Bauform geringe Trägheitskräfte ermöglicht und zu einem sensitiven Ansprechen des Turbinenrads führen kann. Der erfindungsgemäße Turbinenradzähler mit vergleichsweise schlanker und kurzer Bauform kann daher bereits bei einem geringen und über die Drehzahl konstanten Strömungswiderstand eine hohe Messempfindlichkeit zur Verfügung stellen.

Erfindungsgemäß kann so ein Optimum zwischen gegenläufigen Parametern, nämlich Druckverlust und Messempfindlichkeit, ermöglicht werden. Sohin kann sich der der Turbinenradzähler zur Durchflussmengenmessung einer Flüssigkeit, nämlich Wasser, insbesondere Trinkwasser, besonders eignen.

Ist die Turbine als Radialturbine mit einfach gekrümmten Schaufeln am geschlossenen Turbinenrad ausbildet, kann aufgrund des geschlossenen Turbinenrads ein sensitives Ansprechen durch einen verminderten Axialschub auf das Axiallager des Turbinenrads bzw. Laufrads zusätzlich unterstützen, was der Leichtgängigkeit des Turbinenrads förderlich ist und so zu einem geringen Anlaufwert führt. Weiters reduzieren sich aufgrund des geschlossenen Turbinenrads Randverluste, welche an den strömungsbegrenzenden Flächen am Gehäuse entstehen. Dies insbesondere dadurch, dass am geschlossenen Turbinenrad zwischen Turbinenradboden und vorderer Deckscheibe keine Relativbewegung stattfindet, wodurch über die gesamte Drehzahl der Turbine konstant ein niedriger Strömungswiderstand sichergestellt werden kann.

Der Strömungswiderstand durch das Turbinenrad kann unter Berücksichtigung der vergleichsweise niedrigen Druckverhältnisse an der Radialturbine weiter vermindert werden, wenn die Schaufeln an ihren Eintrittskanten vorwärts gekrümmt verlaufen. Der Druckverlust des Turbinenradzählers ist derart weiter verringerbar. Zudem kann damit die Reaktionsschnelligkeit des Turbinenradzählers erhöht werden. Dabei ist im Allgemeinen vorstellbar, dass die Schaufeln zumindest an deren Eintrittskanten in Richtung der Drehrichtung, in welche sich das Turbinenrad im Betrieb dreht, gekrümmt verlaufen. Das erfindungsgemäße Turbinenrad mit in Drehrichtung vorwärts gekrümmten Schaufeln kann daher vergleichsweise schnell zu einem Stillstand kommen, was die Messgenauigkeit des Turbinenradzählers weiter erhöhen kann.

Der Strömungswiderstand des Turbinenrads kann zudem weiter vermindert werden, wenn jene sich zwischen zwei benachbarten Schaufeln ausbildenden Schaufelkanäle des Turbinenrads in Strömungsrichtung gesehen divergierend ausgebildet sind. Der Druckverlust des Turbinenradzählers ist derart weiter verringerbar.

Die Verluste infolge von Reibungseffekten, beispielsweise eine Strömungsablösung an einer Austrittskante der Schaufeln der Radialturbine kann vermindert werden, wenn die Eintrittskante und/oder die Austrittskante der Schaufeln bogenförmig, insbesondere kreisbogenförmig, verlaufen. Vor allem ein kreisbogenförmiger Verlauf kann sich auszeichnen, den Strömungswiderstand des Turbinenrads weiter zu reduzieren, und damit den Druckverlust des Turbinenradzählers zu vermindern.

Der Verlustbeiwert am Turbinenrad ist zusätzlich verringerbar, wenn die Schaufelkontur der Schaufel asymmetrisch zu deren Skelettlinie ausgebildet ist. Ein Anstieg des Strömungswiderstands der Turbine über deren Drehzahl kann auf diese Weise gesenkt werden - was zur Sicherstellung eines konstant geringen Druckverlusts am Turbinenrad beiträgt.

Weisen die Schaufeln des Turbinenrads im Grundriss eine sichelförmige Schaufelkontur auf, können Verluste am Turbinenrad weiter vermindert werden. Insbesondere ist es damit möglich, senkrecht zur Strömungsrichtung auftretende Druckstöße zu unterbinden - was zu einem, vergleichsweise ruhigen Lauf und damit zu besonders genauen Messergebnissen an der Messeinrichtung bzw. einem Aufnehmerführen kann.

Vorzugsweise kann die Druckkante und die Saugkante der Schaufel bogenförmig verlaufen, da auf diese Weise geometrieinduzierte Strömungsablösungen vermieden und damit Beschaufelungsverluste gering gehalten werden können. Der Strömungswiderstand durch die Radialturbine und damit der Druckverlust des Turbinenradzählers ist damit weiter verringerbar.

Vorzugsweise kann die Krümmung der Druckkante der Schaufel kleiner als die Krümmung der Saugkante der Schaufel sein, wodurch ein sich nahezu nicht verjüngender Strömungskanal zwischen Ein- und Austrittskante ermöglicht werden kann. Die erfindungsgemäße Radialturbine kann sohin einen besonders geringen Druckverlust sicherstellen.

Enden die Schaufeln vor der Saugöffnung der Turbine, kann beispielsweise die Strömungsverzögerung an der Austrittskante vermindert werden - was nachteilige Effekte auf die Profildruckverteilung reduzieren kann. Ein erhöhter Strömungswiderstand an der Radialturbine muss daher nicht in Kauf genommen werden.

Die Anlaufempfindlichkeit der Radialturbine bei eventuell geringfügig höherem Druckverlust ist erhöhbar, wenn die Drehachse der Radialturbine geneigt, insbesondere normal, zur Strömungsrichtung am Ein- und Auslass des Turbinenradzählers verläuft.

Konstruktiv einfach gelöst kann die Umlenkung der Strömung in Richtung des Turbinenrads bewerkstelligt werden, indem der einlassseitige Strömungskanal an das Turbinenrad über eine Umlenkung anschließt.

Unter Vermeidung beispielsweise eines Spiralgehäuses vor dem Turbinenrad kann auch vorgesehen sein, dass die Drehachse der Radialturbine in Richtung der Strömungsrichtungen von Ein- und Auslass des Turbinenradzählers verläuft. Auf diese Weise ist beispielsweise durch eine nahezu fluchtende Anordnung der Radialturbine zwischen Ein- und/oder Auslass des Turbinenradzählers zudem eine besonders kompakte Bauform erreichbar.

Eine kompakte Bauform für einen geringen Strömungswiderstand durch die Radialturbine kann erreicht werden, wenn der Turbinenradboden des Turbinenrads konisch verläuft.

Vorzugsweise bildet bei einem offenen Turbinenrad die Umlenkung die vordere Deckscheibe des Turbinenrads aus, was die Konstruktion des Turbinenradzählers noch weiter vereinfachen kann.

### Kurze Beschreibung der Zeichnungen

In den Figuren ist beispielsweise der Erfindungsgegenstand anhand mehrerer Ausführungsvarianten näher dargestellt. Es zeigen
- Fig. 1: eine Draufsicht auf einen geschnitten dargestellten Turbinenradzähler nach einem ersten Ausführungsbeispiel,
- Fig. 2: eine Seitenansicht des Turbinenradzählers der Fig. 1,
- Fig. 3: eine vergrößerte Teilansicht auf ein Turbinenrad eines Turbinenradzählers nach Fig. 1, Fig. 4, Fig. 5 oder Fig. 7,
- Fig. 4: eine Seitenansicht auf einen geschnittenen Turbinenradzähler nach einem zweiten Ausführungsbeispiel,
- Fig. 5: eine Draufsicht auf einen geschnitten dargestellten Turbinenradzähler nach einem dritten Ausführungsbeispiel und
- Fig. 6: eine Seitenansicht des Turbinenradzählers der Fig. 5 und
- Fig. 7: eine Seitenansicht auf einen geschnittenen Turbinenradzähler nach einem vierten Ausführungsbeispiel.

### Wege zur Ausführung der Erfindung

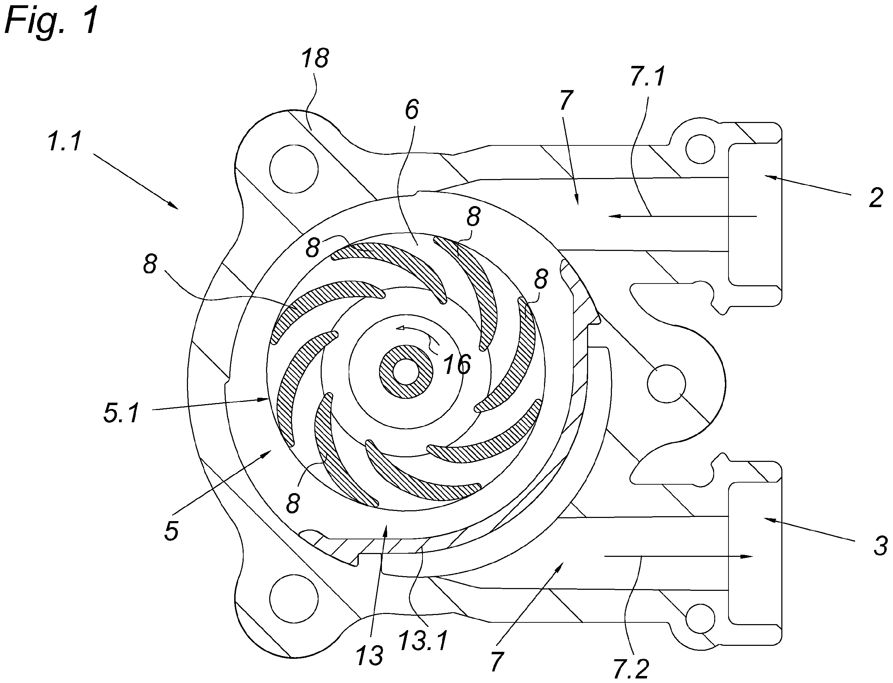

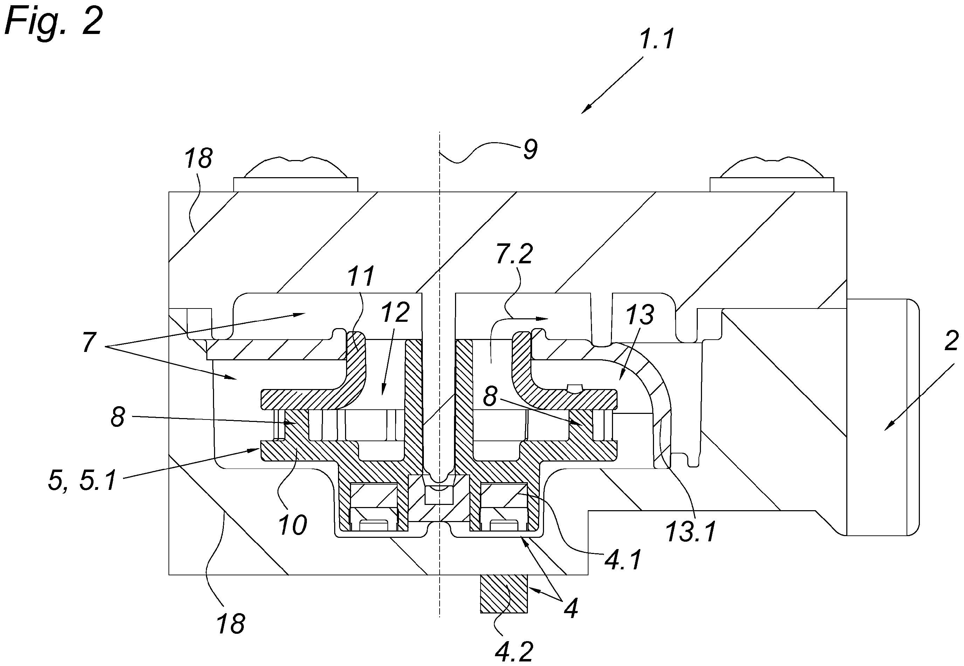

Nach Fig. 1 wird beispielsweise ein Turbinenradzähler 1.1 nach einem ersten Ausführungsbeispiel dargestellt. Der Turbinenradzähler 1.1 dient zur Durchflussmengenmessung einer Flüssigkeit, nämlich Trinkwasser, welche Flüssigkeit über einen Einlass 2 des Turbinenradzählers 1.1 einströmen und über dessen Auslass 3 ausströmen kann. Das Gehäuse 18 des Turbinenradzählers 1.1 ist zweigeteilt, wie in Fig. 2 zu entnehmen.

Zur Durchflussmengenmessung weist der Turbinenradzähler 1.1 einen Messeinrichtung 4 auf, die beispielsweise nach dem physikalischen Prinzip der elektromagnetischen Induktion arbeitet, bei dem der Vorbeilauf eines rotierenden Permanentmagneten 4.1 am Turbinenradzähler 1.2 als Drehgeber bei einer Messspule 4.2 detektiert und so gezählt werden kann - was in Fig. 2 zu erkennen ist. Auf Basis des Zählergebnisses kann auf die Durchflussmenge rückgeschlossen werden. Die Auswertung des Messergebnisses bzw. die Zählung muss nicht zwangsweise am Turbinenradzähler 1.2 vorgesehen sein. Die zumindest als Aufnehmer (Permanentmagnet/Messspule) am Turbinenradzähler 12 ausgeführte Messeinrichtung 4 kann auch andere Sensoren aufweisen, um mit dem Turbinenrad 6 zur Durchflussmengenmessung der Flüssigkeit zusammenwirken.

Zur Erzeugung dieser messbaren Rotationsbewegung ist dem Turbinenradzähler 1.1 eine Turbine 5 zugeordnet, dessen Turbinenrad 6 im Strömungskanal 7 des Turbinenradzählers 1.1 zwischen Einlass 2 und Auslass 3 angeordnet ist. Die Strömungsrichtung 7.1 der Flüssigkeit im Strömungskanals 7 ist in Fig. 1 angedeutet. Das Turbinenrads 6 wird zentripetal durchströmt, also von außen nach innen.

Das Turbinenrad 6 weist mehrere gekrümmte Schaufeln 8 auf, die in Abhängigkeit der Durchflussmenge das Turbinenrad 6 in Drehung versetzen. Am Turbinenrad 6 ist der Permanentmagnet 4.1 befestigt, wodurch das Turbinenrad 6 mit der Messeinrichtung 4 zur Durchflussmessung der Flüssigkeit zusammenwirkt.

Um eine hohe Messempfindlichkeit bei vergleichsweise geringem Druckverlust durch das Turbinenrad 6 sicherzustellen, ist die Turbine 5 als Radialturbine 5.1 ausgebildet. Dabei strömt die Flüssigkeit radial zur Drehachse 9 des Turbinenrads 6 und in weiterer Folge axial vom Turbinenrad 6. Die Radialturbine 5.1 ist als einstufige Turbine 5 ausgeführt, wie in der Fig. 2 zu erkennen ist.

Des Weiteren weist die erfindungsgemäße Radialturbine 5.1 am Turbinenrad 6 einfach gekrümmte Schaufeln 8 auf - was bedeutet, dass der Zuströmwinkel β1 bzw. der Abströmwinkel β2, wie in der Draufsicht erkennbar ist, an Turbinenradboden 10 (oftmals auch als hintere Deckscheibe bezeichnet) und an vorderer Deckscheibe 11 der Radialturbine 5.1 gleich sind. Dies reduziert den Strömungswiderstand durch die Radialturbine 5.1 und sorgt zudem für eine kurze und schlanke Bauform am Turbinenrad 6. Ein leichtgängiges Turbinenrad 6 ist damit geschaffen.

Zudem ist das Turbinenrad 6 mit der vorderen Deckscheibe 11 geschlossen ausgeführt, was Spaltverluste verringert und damit selbst bei geringen Durchflussmengen ein schnelles Anlaufen sicherstellt.

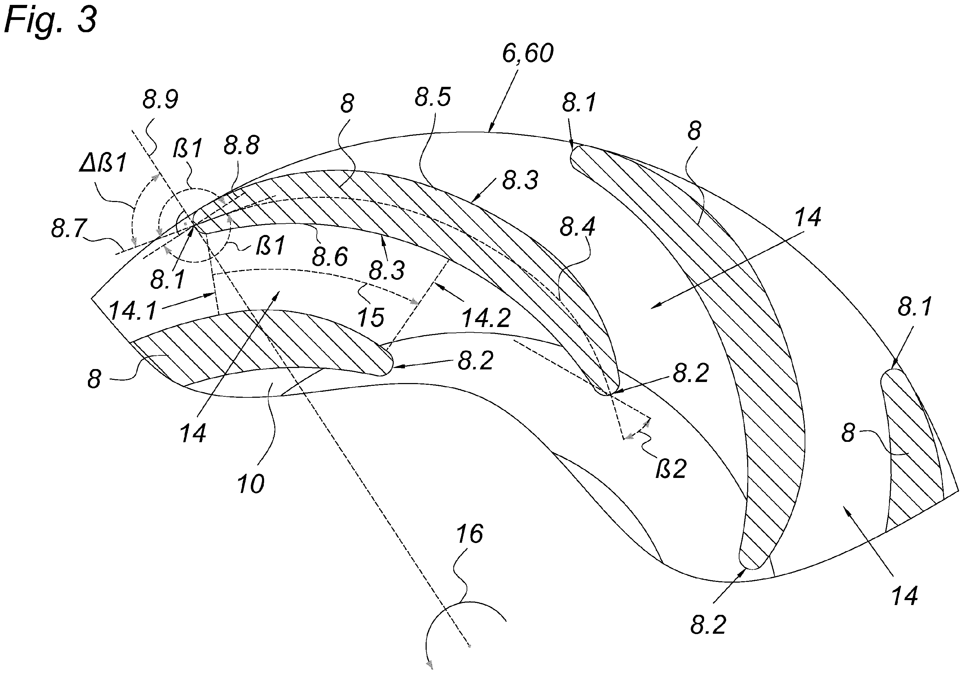

Wie insbesondere der Fig. 3 zu entnehmen, verlaufen die Schaufeln 8 an der Eintrittskante 8.1 der Turbinenräder 6, 60 vorwärts gekrümmt (β1 > 90 Grad). Durch diese in Drehrichtung 16 vorwärts gekrümmten Schaufeln 8 wird unter verringertem Wirkungsgrad der Druckverlust der Radialturbine 5.1 weiter reduziert.

Wie in Fig. 3 weiter zu entnehmen ist, wird der Schaufeleintrittswinkel β1 zwischen der Eintrittstangente 8.7 und der Umfangstangente 8.8 an der Schaufel 8 eingeschlossen. Die Vorwärtskrümmung Δβ1 bezieht sich auf den Winkel, um den die Schaufel 8 gegenüber einer mittels einer punktierten Linie 8.9 angedeuteten radialen Erstreckung hinsichtlich ihrer Eintrittstangente 8.7 geneigt ist.

Zudem verringern sich die Profilverluste an den Schaufeln 8 durch die bogenförmige Eintrittskante 8.1 bzw. bogenförmige Austrittskante 8.2 - wie in Fig. 3 im Detail erkennbar ist. Die Bogenform ist eine Kreisbogenform mit einem, vergleichsweise großen Radius. Dadurch bildet sich eine relativ dicke Profilvorder- und Profilhinterkante aus, was die Druckverteilung in diesem Bereich vergleichmäßigt und Profilverluste weiter reduziert.

Zudem ist nach Fig. 3 ersichtlich, dass die Schaufelkontur 8.3 der Schaufel 8 asymmetrisch zu deren Skelettlinie 8.4 ausgebildet ist - es weisen nämlich die Schaufeln 8 im Grundriss eine sichelförmige Schaufelkontur 8.3 auf. Dies reduziert den Druckverlust durch die Radialturbine 5.1 weiter und sorgt zudem für einen niedrigen Anlaufwert am Turbinenrad 6.

Wie der Fig. 3 zudem entnommen werden kann, verlaufen Druckkante 8.5 und Saugkante 8.6 der Schaufeln 8 bogenförmig, wobei die Krümmung der Druckkante 8.5 der Schaufeln 8 kleiner ist als die Krümmung der Saugkante 8.6 der Schaufeln 8.

Zudem enden die Schaufeln 8 vor der Saugöffnung 12 der Turbine 5, was einen kompakt ausgeführten Turbinenradzähler 1.1 ermöglicht, der mit einem, vergleichsweise niedrigen Druckverlust gekennzeichnet ist.

Nach der ersten Ausführungsvariante entsprechend den Figuren 1 bis 3 verläuft die Drehachse 9 der Radialturbine 5.1 geneigt, nämlich normal, zur Strömungsrichtung 7.2 am Auslass 3 bzw. im gegebenen Beispiel auch am Einlass 2 des Turbinenradzählers 1.1. Dies erhöht den Druckverlust marginal, verringert aber vorteilhaft den Anlaufwert des Turbinenrads 6.

Zur Umlenkung des einlassseitigen Strömungskanals 7 ist eine Umlenkung 13 vorgesehen, die ein Umlenkteil 13.1 im Strömungskanal 7 aufweist.

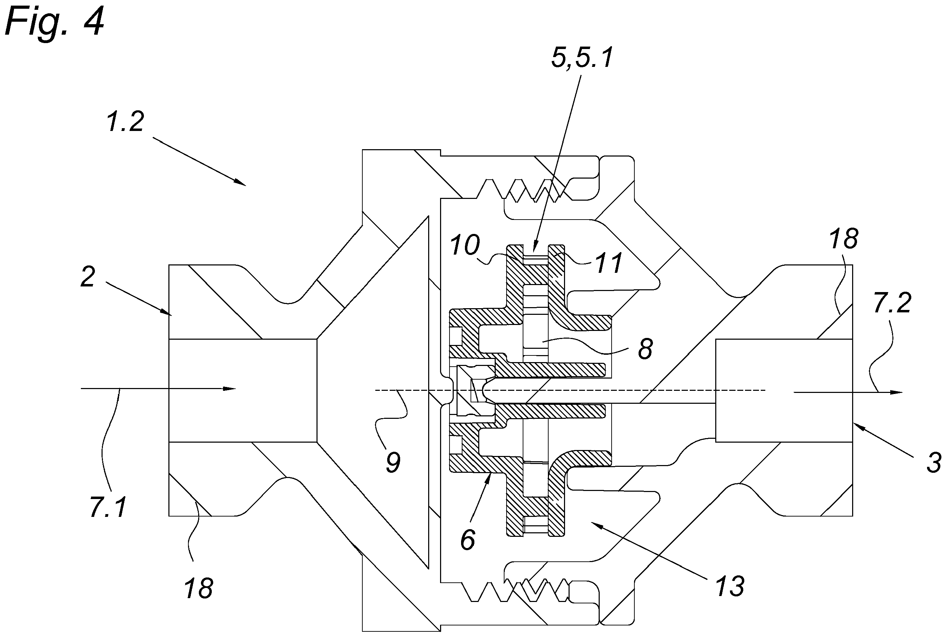

In Fig. 4 ist ein weiterer Turbinenradzähler 1.2 als zweites Ausführungsbeispiel dargestellt. Dieser zweite Turbinenradzähler 1.2 unterscheidet sich vom ersten Turbinenradzähler 1.1 nach den Figuren 1 und 2 in der Anordnung der Drehachse 9 der Radialturbine 5.1 parallel zur Rohrachse mit Einlass 2 und Auslass 3. So verläuft die Drehachse 9 der Radialturbine 5.1 des zweiten Turbinenradzählers 1.2 in Richtung der Strömungsrichtungen 7.1, 7.2 am Ein- und Auslass 2, 3 des Turbinenradzählers 1.2. Damit kann die Konstruktion im Bereich der Umlenkung 13 vereinfacht werden, da das aus Fig. 2 bekannte Umlenkteil 13.1 entfällt. Diese Bauform am Turbinenradzähler 1.2 erhöht die Messempfindlichkeit zusätzlich.

Alle sich zwischen zwei benachbarten Schaufeln 8 ausbildenden Schaufelkanäle 14 des Turbinenrads 8 sind in Strömungsrichtung 15 gesehen voneinander divergierend ausgebildet. Dies führt zu einem vergleichsweise geringen Druckverlust am Turbinenrad. Vom jeweiligen Einlass 14.1 der Schaufelkanäle 14 aus gesehen sind die Schaufelkanäle 14 gering divergierend, also nahezu konstant im Abstand zueinander verlaufend ausgebildet, welche Divergenz zum Auslass 14.2 der Schaufelkanäle zunimmt.

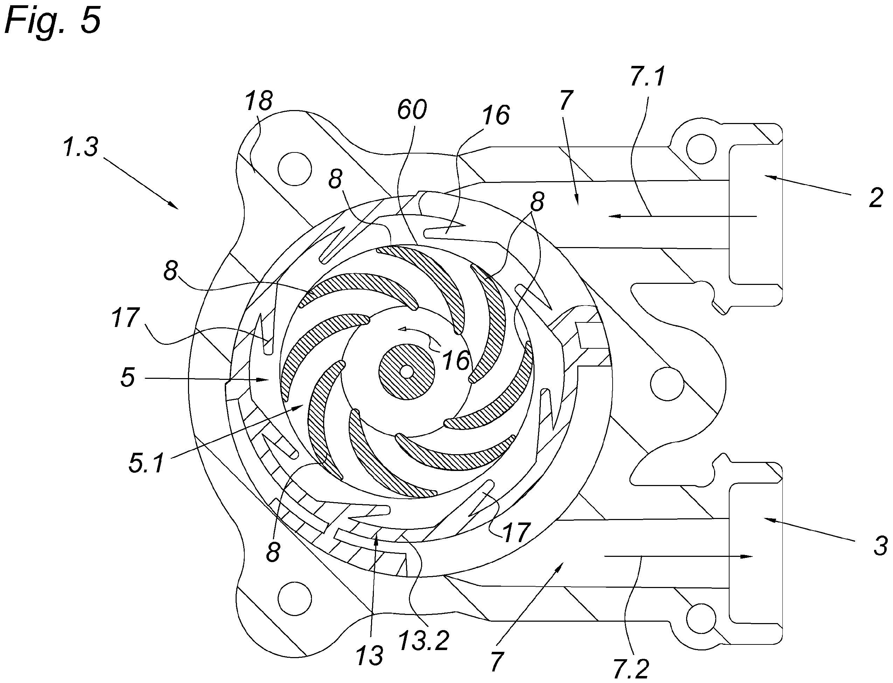

In Fig. 5 ist ein weiterer Turbinenradzähler 1.3 als drittes Ausführungsbeispiel dargestellt. Dieser dritte Turbinenradzähler 1.3 unterscheidet sich vom ersten Turbinenradzähler 1.1 im Wesentlichen durch sein offenes Turbinenrad 60. Beim Turbinenrad 60 findet sohin eine Relativbewegung zwischen Turbinenradboden 10 und vorderer Deckscheibe 11 statt. Die Merkmale zu den Schaufeln 8 des Turbinenrads 60 sind mit jenen des Turbinenrads 6 nach Fig. 1 gleich, welche Merkmale im Detail nach Fig. 3 zu erkennen sind.

Zudem weist der Turbinenradzähler 1.3 eine anders geformte Umlenkung 13 auf - und zwar sind an diesem Umlenkteil 13.2 Leitschaufeln 17 vorgesehen, die in der Art eines Leitrads die Strömung auf das Turbinenrad 60 bzw. dessen Schaufeln 8 lenken. Das Umlenkteil 13.2 bildet auch die vordere Deckscheibe 11 des Turbinenrads 60 aus, was die Konstruktion besonders vereinfacht.

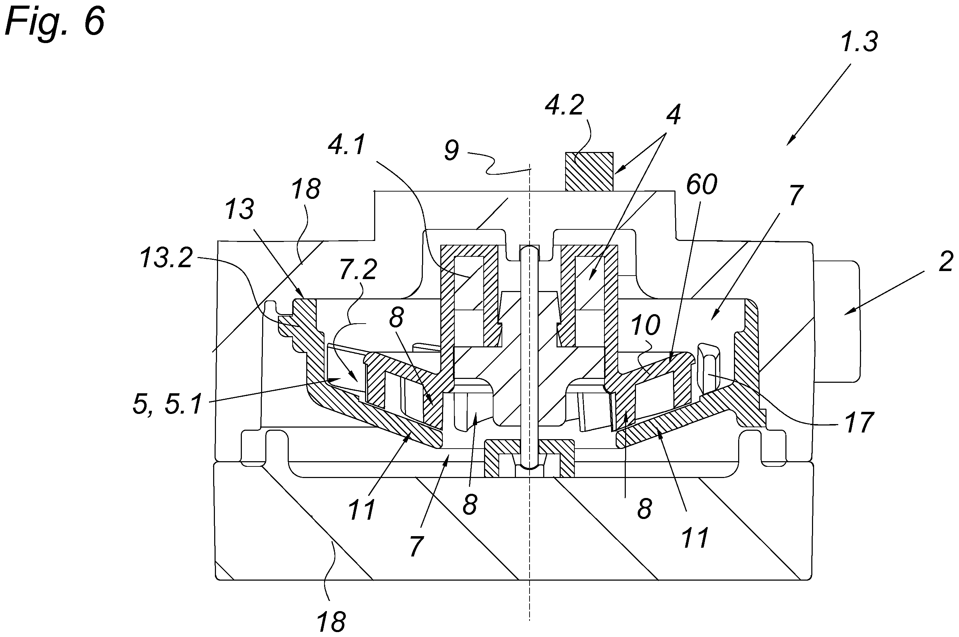

Wie zudem der Fig. 6 entnommen werden kann, verläuft der Turbinenradboden 10 des Turbinenrads 60 konisch, was den Strömungswiderstand durch die Radialturbine 5.1 weiter verringert.

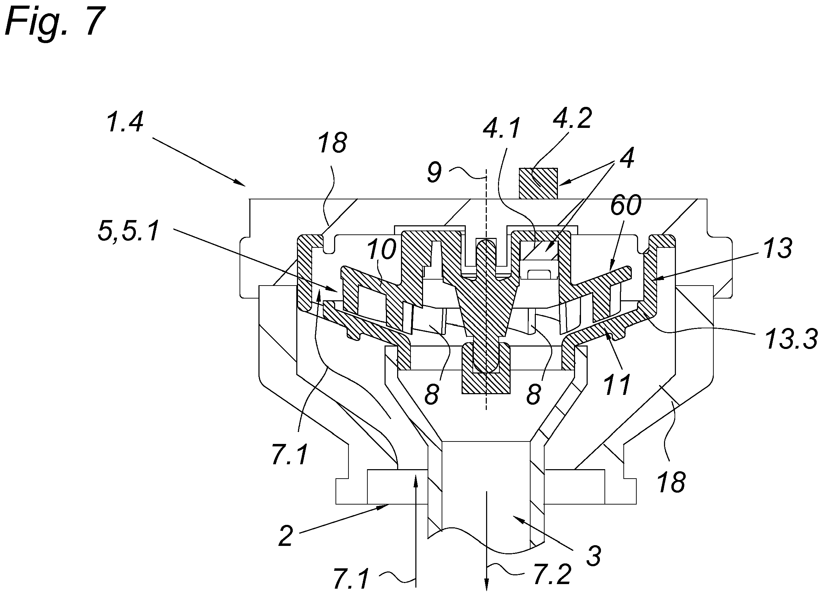

Nach Fig. 7 wird ein weiterer Turbinenradzähler 1.4 als viertes Ausführungsbeispiel dargestellt. Dieser vierte Turbinenradzähler 1.4 unterscheidet sich vom zweiten Turbinenradzähler 1.2 im Wesentlichen durch sein offenes Turbinenrad 60.

Beim Turbinenrad 60 findet sohin eine Relativbewegung zwischen Turbinenradboden 10 und vorderer Deckscheibe 11 statt. Die Merkmale zu den Schaufeln 8 des Turbinenrads 60 sind mit jenen des Turbinenrads 6 nach Fig. 1 gleich, welche Merkmale im Detail nach Fig. 3 zu erkennen sind.

Wie zudem der Fig. 7 zu entnehmen, verläuft der Turbinenradboden 10 des Turbinenrads 60 konisch, was den Strömungswiderstand durch die Radialturbine 5.1 weiter verringert. Außerdem weist der vierte Turbinenradzähler 1.4 eine Umlenkung 13 mit einem Umlenkteil 13.3 auf, das die vordere Deckscheibe 11 ausbildet.

## Patentansprüche

1. Turbinenradzähler zur Durchflussmengenmessung einer Flüssigkeit, mit einer Messeinrichtung (4), mit einem Einlass (2) und einem Auslass (3) für die zu messende Flüssigkeit, mit einem zwischen Ein- und Auslass (2, 3) vorgesehenen Strömungskanal (7) und mit einer Turbine (5), die ein im Strömungskanal (7) angeordnetes Turbinenrad (6, 60) mit gekrümmten Schaufeln (8) aufweist und wobei das Turbinenrad (6, 60) mit der Messeinrichtung (4) zur Durchflussmengenmessung der Flüssigkeit zusammenwirkt, wobei die Turbine (5) als Radialturbine (5.1) mit einfach gekrümmten Schaufeln (8) am Turbinenrad (6, 60) ausbildet ist **dadurch gekennzeichnet, dass** die Schaufeln (8) an ihren Eintrittskanten (8.1) vorwärts gekrümmt verlaufen und damit in Drehrichtung (16) des Turbinenrads (6, 60) vorwärts gekrümmt verlaufen.

2. Turbinenradzähler nach Anspruch 1, **dadurch gekennzeichnet, dass** die Turbine (5) als Radialturbine (5.1) mit einfach gekrümmten Schaufeln (8) am geschlossenen Turbinenrad (6, 60) ausbildet ist.

3. Turbinenradzähler nach Anspruch 1 oder 2, **dadurch gekennzeichnet, dass** jene sich zwischen zwei benachbarten Schaufeln (8) ausbildenden Schaufelkanäle (14) des Turbinenrads (6, 60) in Strömungsrichtung (15) gesehen divergierend ausgebildet sind.

4. Turbinenradzähler nach einem der Ansprüche 1 bis 3, **dadurch gekennzeichnet**, die Eintrittskante (8.1) und/oder die Austrittskante (8.2) der Schaufeln (8) bogenförmig verlaufen.

5. Turbinenradzähler nach Anspruch 4, **dadurch gekennzeichnet**, die die Eintrittskante (8.1) und/oder die Austrittskante (8.2) der Schaufeln (8) kreisbogenförmig verlaufen.

6. Turbinenradzähler nach einem der Ansprüche 1 bis 5, **dadurch gekennzeichnet, dass** die Schaufelkontur (8.3) der Schaufel (8) asymmetrisch zu deren Skelettlinie (8.4) ausgebildet ist.

7. Turbinenradzähler nach einem der Ansprüche 1 bis 6, **dadurch gekennzeichnet, dass** die Schaufeln (8) des Turbinenrads (6, 60) im Grundriss eine sichelförmige Schaufelkontur (8.3) aufweisen.

8. Turbinenradzähler nach einem der Ansprüche 1 bis 7, dass die Druckkante (8.5) und die Saugkante (8.6) der Schaufel (8) bogenförmig verlaufen.

9. Turbinenradzähler nach einem der Ansprüche 1 bis 8, dass die Krümmung der Druckkante (8.5) der Schaufel (8) kleiner ist als die Krümmung der Saugkante (8.6) der Schaufel (8).

10. Turbinenradzähler nach einem der Ansprüche 1 bis 9, dass die Schaufeln (8) vor der Saugöffnung (12) der Turbine (5) enden.

11. Turbinenradzähler nach einem der Ansprüche 1 bis 10, **dadurch gekennzeichnet, dass** die Drehachse (9) der Radialturbine (5.1) geneigt zur Strömungsrichtung (7.2) am Auslass (3) und/oder am Einlass (2) des Turbinenradzählers (1.1, 1.2, 1.3, 1.4) verläuft.

12. Turbinenradzähler nach Anspruch 11, **dadurch gekennzeichnet, dass** die Drehachse (9) der Radialturbine (5.1) normal zur Strömungsrichtung (7.2) am Auslass (3) und/oder am Einlass (2) des Turbinenradzählers (1.1, 1.2, 1.3, 1.4) verläuft.

13. Turbinenradzähier nach einem der Ansprüche 1 bis 12, **dadurch gekennzeichnet, dass** der einlassseitige Strömungskanal (7) an das Turbinenrad (6, 60) über eine Umlenkung (13) anschließt.

14. Turbinenradzähier nach einem der Ansprüche 1 bis 13, **dadurch gekennzeichnet, dass** die Drehachse (9) der Radialturbine (5.1) in Richtung der Strömungsrichtungen (7.1, 7.2) am Ein- und/oder Auslass (2, 3) des Turbinenradzählers (1.1, 1.2, 1.3, 1.4) verläuft.

15. Turbinenradzähler nach einem der Ansprüche 1 bis 14, **dadurch gekennzeichnet, dass** der Turbinenradboden (10) des Turbinenrads (60) konisch verläuft.

16. Turbinenradzähler nach Anspruch 13 und 15, **dadurch gekennzeichnet, dass** bei einem offenen Turbinenrad (60) die Umlenkung (13) die vordere Deckscheibe (11) des Turbinenrads (60) ausbildet.

## Claims

1. Turbine wheel meter for measuring the flow rate of a liquid, with a measuring device (4), with an inlet (2) and an outlet (3) for the liquid to be measured, with a flow channel (7) provided between the inlet and outlet (2, 3) and with a turbine (5), which has a turbine wheel (6, 60) with curved blades (8) arranged in the flow channel (7), and wherein the turbine wheel (6, 60) interacts with the measuring device (4) for measuring the flow rate of the liquid, wherein the turbine (5) is designed as a radial turbine (5.1) with single-curved blades (8) on the turbine wheel (6, 60), **characterized in that** the blades (8) extend curved forwards at their leading edges (8.1) and thus extend curved forwards in the direction of rotation (16) of the turbine wheel (6, 60).

2. Turbine wheel meter according to claim 1, **characterized in that** the turbine (5) is formed as a radial turbine (5.1) with single-curved blades (8) on the closed turbine wheel (6, 60).

3. Turbine wheel meter according to claim 1 or 2, **characterized in that** those blade passages (14) of the turbine wheel (6, 60) which are formed between two adjacent blades (8) are designed to be divergent when viewed in the flow direction (15).

4. Turbine wheel meter according to one of claims 1 to 3, **characterized in that** the leading edge (8.1) and/or the trailing edge (8.2) of the blades (8) are curved.

5. Turbine wheel meter according to claim 4, **characterized in that** the leading edge (8.1) and/or the trailing edge (8.2) of the blades (8) extend in an arcuate manner.

6. Turbine wheel meter according to one of claims 1 to 5, **characterized in that** the blade contour (8.3) of the blade (8) is designed asymmetrically to its skeleton line (8.4).

7. Turbine wheel meter according to one of claims 1 to 6, **characterized in that** the blades (8) of the turbine wheel (6, 60) have a sickle-shaped blade contour (8.3) in plan view.

8. Turbine wheel meter according to one of claims 1 to 7, **characterized in that** the pressure edge (8.5) and the suction edge (8.6) of the blade (8) extend in a curved manner.

9. Turbine wheel meter according to one of claims 1 to 8, **characterized in that** the curvature of the pressure edge (8.5) of the blade (8) is smaller than the curvature of the suction edge (8.6) of the blade (8).

10. Turbine wheel meter according to one of claims 1 to 9, **characterized in that** the blades (8) end before the suction opening (12) of the turbine (5).

11. Turbine wheel meter according to one of claims 1 to 10, **characterized in that** the axis of rotation (9) of the radial turbine (5.1) extends in an inclined manner relative to the flow direction (7.2) at the outlet (3) and/or at the inlet (2) of the turbine wheel meter (1.1, 1.2, 1.3, 1.4).

12. Turbine wheel meter according to claim 11, **characterized in that** the axis of rotation (9) of the radial turbine (5.1) extends perpendicularly to the flow direction (7.2) at the outlet (3) and/or at the inlet (2) of the turbine wheel meter (1.1, 1.2, 1.3, 1.4).

13. Turbine wheel meter according to one of claims 1 to 12, **characterized in that** the inlet-side flow channel (7) is connected to the turbine wheel (6, 60) via a deflection (13).

14. Turbine wheel meter according to one of claims 1 to 13, **characterized in that** the axis of rotation (9) of the radial turbine (5.1) extends in the direction of the flow directions (7.1, 7.2) at the inlet and/or outlet (2, 3) of the turbine wheel meter (1.1, 1.2, 1.3, 1.4).

15. Turbine wheel meter according to one of claims 1 to 14, **characterized in that** the turbine wheel base (10) of the turbine wheel (60) extends conically.

16. Turbine wheel meter according to claims 13 and 15, **characterized in that** in an open turbine wheel (60) the deflection (13) forms the front cover disc (11) of the turbine wheel (60).

## Revendications

1. Compteur à roue de turbine pour mesurer le débit d'un liquide, pourvu d'un dispositif de mesure (4) avec une entrée (2) et une sortie (3) pour le liquide à mesurer, d'un canal d'écoulement (7) prévu entre l'entrée et la sortie (2, 3) et d'une turbine (5) qui présente une roue de turbine (6, 60) disposée dans le canal d'écoulement (7) et comportant des aubes incurvées (8), et dans lequel la roue de turbine (6, 60) coopère avec le dispositif de mesure (4) pour mesurer le débit du liquide, dans lequel la turbine (5) est réalisée sous la forme d'une turbine radiale (5.1) avec des aubes (8) à courbure simple sur la roue de turbine (6, 60), **caractérisé en ce que** les aubes (8) sont incurvées vers l'avant au niveau de leurs bords d'attaque (8.1) et donc incurvées vers l'avant dans le sens de rotation (16) de la roue de turbine (6, 60).

2. Compteur à roue de turbine selon la revendication 1, **caractérisé en ce que** la turbine (5) est réalisée sous la forme d'une turbine radiale (5.1) avec des aubes (8) à courbure simple sur la roue de turbine fermée (6, 60).

3. Compteur à roue de turbine selon la revendication 1 ou 2, **caractérisé en ce que** les canaux (14) de la roue de turbine (6, 60) qui sont formés entre deux aubes (8) adjacentes sont réalisés divergents lorsqu'ils sont vus dans le sens d'écoulement (15).

4. Compteur à roue de turbine selon l'une des revendications 1 à 3, **caractérisé en ce que** le bord d'attaque (8.1) et/ou le bord de fuite (8.2) des aubes (8) s'étendent en forme d'arc.

5. Compteur à roue de turbine selon la revendication 4, **caractérisé en ce que** le bord d'attaque (8.1) et/ou le bord de fuite (8.2) des aubes (8) s'étendent en forme d'arc de cercle.

6. Compteur à roue de turbine selon l'une des revendications 1 à 5, **caractérisé en ce que** le contour d'aube (8.3) de l'aube (8) est asymétrique par rapport à sa ligne de squelette (8.4).

7. Compteur à roue de turbine selon l'une des revendications 1 à 6, **caractérisé en ce que** les aubes (8) de la roue de turbine (6, 60) ont un contour d'aube (8.3) en forme de faucille en plan.

8. Compteur à roue de turbine selon l'une des revendications 1 à 7, **caractérisé en ce que** le bord de pression (8.5) et le bord d'aspiration (8.6) de l'aube (8) s'étendent en forme d'arc.

9. Compteur à roue de turbine selon l'une des revendications 1 à 8, **caractérisé en ce que** la courbure du bord de pression (8.5) de l'aube (8) est inférieure à la courbure du bord d'aspiration (8.6) de l'aube (8).

10. Compteur à roue de turbine selon l'une des revendications 1 à 9, **caractérisé en ce que** les aubes (8) se terminent avant l'ouverture d'aspiration (12) de la turbine (5).

11. Compteur à roue de turbine selon l'une des revendications 1 à 10, **caractérisé en ce que** l'axe de rotation (9) de la turbine radiale (5.1) est incliné par rapport au sens d'écoulement (7.2) à la sortie (3) et/ou à l'entrée (2) du compteur à roue de turbine (1.1, 1.2, 1.3, 1.4).

12. Compteur à roue de turbine selon la revendication 11, **caractérisé en ce que** l'axe de rotation (9) de la turbine radiale (5.1) s'étend perpendiculairement au sens d'écoulement (7.2) à la sortie (3) et/ou à l'entrée (2) du compteur à roue de turbine (1.1, 1.2, 1.3, 1.4).

13. Compteur à roue de turbine selon l'une des revendications 1 à 12, **caractérisé en ce que** le canal d'écoulement (7) côté entrée est relié à la roue de turbine (6, 60) par une déviation (13).

14. Compteur à roue de turbine selon l'une des revendications 1 à 13, **caractérisé en ce que** l'axe de rotation (9) de la turbine radiale (5.1) s'étend dans la direction des sens d'écoulement (7.1, 7.2) à l'entrée et/ou à la sortie (2, 3) du compteur à roue de turbine (1.1, 1.2, 1.3, 1.4).

15. Compteur à roue de turbine selon l'une des revendications 1 à 14, **caractérisé en ce que** le fond de roue de turbine (10) de la roue de turbine (60) s'étend de manière conique.

16. Compteur à roue de turbine selon les revendications 13 et 15, **caractérisé en ce que** dans le cas d'une roue de turbine ouverte (60), la déviation (13) forme le disque de recouvrement avant (11) de la roue de turbine (60).
